# EUROPÄISCHE PATENTANMELDUNG

(11) **EP 3 739 396 A1**
(43) Veröffentlichungstag der Anmeldung: **18.11.2020**
(21) Anmeldenummer: 19174700.5
(22) Anmeldetag: 15.05.2019
(51) Int. Cl.: G05B 9/02, B25J 9/16, G05B 19/042

(54) **SYSTEM ZUR BEWEGUNGSFÜHRUNG EINES MANIPULATORS AUFWEISEND EINEN ERSTEN UND EINEN ZWEITEN PROZESSOR**

(71) Anmelder: Siemens Aktiengesellschaft, 80333 München (DE)
(72) Erfinder: Ender, Stefan, 86459 Gessertshausen (DE); Mönnich, Holger, 86316 Friedberg (DE)

(57) **Zusammenfassung**

Die Erfindung betrifft ein System zur Bewegungsführung eines Manipulators (1) , aufweisend einen ersten Prozessor (201) zum Durchführen von Regelungsaufgaben zur Bewegungsführung, wobei die Regelungsaufgaben in Echtzeit durchführbar sind und unter Einhaltung vorgebbarer, insbesondere zertifizierbarer, Sicherheitsanforderungen durchführbar sind; und aufweisend mindestens einen zweiten Prozessor (202) zum Durchführen einer Anwendungsaufgabe umfassend eine Bahnplanungsaufgabe sowie eine Aufgabe zur Verarbeitung von Nutzereingaben, wobei der zweite Prozessor (202) anpassbar ist zur Durchführung mindestens einer geänderten oder weiteren Anwendungsaufgabe. Der erste Prozessor (201) führt nur zertifizierte Anwendung aus, z.B. Bewegungsführung oder sicherheitskritische Anwendungen, wobei der zweite Prozessor (202) nicht zertifizierte Anwendungen durchführt, z.B. GUI oder Bahnplanung. Bei Änderungen müssen nicht beide Prozessoren erneut zertifiziert werden. Die Erfindung betrifft ferner ein Verfahren zur Änderung oder Erweiterung der Anwendungsaufgaben eines Manipulators mittels eines ersten Prozessors und eines zweiten Prozessors.

## Beschreibung

Die Erfindung betrifft ein System zur Bewegungsführung eines Manipulators, aufweisend einen ersten Prozessor und mindestens einen zweiten Prozessor sowie ein Verfahren zur Änderung oder Erweiterung der Anwendungsaufgaben eines Manipulators mittels eines ersten Prozessors und eines zweiten Prozessors.

Bekannte Manipulatoren, auch Roboter genannt, sind häufig mit einem Echtzeitbetriebssystem ausgestattet. Dabei werden in dem Echtzeitsystem die Bahnplanung und die Regelung des Manipulators implementiert. Zusätzlich zur Regelung wird eine sichere Überwachung zur Einhaltung von Safety-Anforderungen benötigt. Dabei werden beispielsweise Applikationen und Sensorik eingesetzt, welche im Hinblick auf die Signalverarbeitung in Echtzeit ausgeführt oder verarbeitet werden müssen. Hierfür werden herkömmlicherweise Mehrkernprozessoren verwendet, welche verschiedene Implementierungen einer Verarbeitungsaufgabe in Software durchführen. Durch unterschiedliche Implementierung auf verschiedenen Kernen eines Prozessors werden beispielsweise Safety-Anforderungen erfüllt. Um Echtzeitanforderungen zu erfüllen, können beispielsweise mehrere Kerne eines Prozessors vorgesehen sein, auf welche beispielsweise die Signalverarbeitung und die Regelung aufgeteilt werden.

Ferner ist es bekannt, durch Maßnahmen wie beispielsweise Coded Processing-Verfahren eine redundante Verarbeitung in Software vorzusehen, wodurch ebenfalls Safety-Anforderungen erfüllt werden können.

Ja nach Verwendung eines solchen Prozessors in einem System und je nach Anforderungen an das System im Hinblick auf Safety- oder Sicherheitsmaßnahmen, muss das System getestet, zertifiziert oder geprüft werden. Je nach Anwendungsfall darf beispielsweise nur ein mit dem verbauten Prozessor zertifiziertes System verwendet werden. Beispielsweise darf ein Robotergreifarm nur in einer Anlage eingesetzt werden, wenn er als Gesamtsystem mit dem spezifischen verbauten Chip getestet und zertifiziert wurde.

Bei einer Änderung der Anwendung oder einem benötigten Systemumbau kann eine Anpassung des verbauten Prozessors nötig werden, welche eine erneute Zertifizierung des gesamten Systems nötig macht. Beispielsweise muss ein Controller zur Regelung und Bahnplanung eines Manipulators neu zertifiziert werden, wenn der Prozessor beispielsweise für eine komplexere Bearbeitungsaufgabe angepasst oder ersetzt werden muss.

Vor diesem Hintergrund ist es eine Aufgabe der vorliegenden Erfindung, ein flexibleres System zur Bewegungsführung eines Manipulators bereitzustellen. Diese Aufgabe wird durch den Gegenstand der unabhängigen Ansprüche gelöst. Vorteilhafte Ausgestaltungen sind in den Ausführungsbeispielen angegeben.

Die Erfindung betrifft ein System zur Bewegungsführung eines Manipulators, aufweisend
- einen ersten Prozessor zum Durchführen von Regelungsaufgaben zur Bewegungsführung, wobei die Regelungsaufgaben in Echtzeit durchführbar sind und unter Einhaltung vorgebbarer, insbesondere zertifizierbarer, Sicherheitsanforderungen durchführbar sind;
- mindestens einen zweiten Prozessor zum Durchführen einer Anwendungsaufgabe umfassend eine Bahnplanungsaufgabe sowie einer Aufgabe zur Verarbeitung von Nutzereingaben, wobei der zweite Prozessor anpassbar ist zur Durchführung mindestens einer geänderten oder weiteren Anwendungsaufgabe.

Es folgt somit eine Aufteilung von Regelungsaufgaben in solche, die Echtzeitanforderungen erfüllen müssen und zudem Sicherheitsanforderungen erfüllen müssen und solchen, die Anwendungsaufgaben wie eine Bahnplanung und eine Verarbeitung von Nutzereingaben betreffen. Ein Nachweis der Einhaltung vorgebbarer Sicherheitsanforderungen, beispielsweise durch eine Zertifizierung, muss somit vorteilhafterweise nur für den ersten Prozessor erfolgen. Dieser erste Prozessor ist somit für die Regelung zur Bewegungsführung, auch Motion Control genannt, vorgesehen und wird typischerweise in Anwendungen eingesetzt, in welchen die Regelung in Echtzeit erfolgen muss, so dass der erste Prozessor echtzeitfähig sein muss. Zudem müssen typischerweise Safety-Anforderungen eingehalten werden.

Der zweite Prozessor dient als ein Applikationsprozessor und ist eingerichtet zum Durchführen der Anwendungsaufgaben wie der Applikation der Bahnplanung und der Verarbeitung von Nutzereingaben. Die Aufgabe zur Verarbeitung von Nutzereingaben wird beispielsweise durch eine graphische Nutzerschnittstelle, bzw. ein zugehöriges Programm vorgegeben. Eine solche graphische Nutzerschnittstelle oder Graphical User Interface, kurz GUI, kann als Applikation auf dem zweiten Prozessor ablaufen.

Der zweite Prozessor muss vorteilhafterweise nicht zertifiziert werden und keine vorgebbaren Sicherheitsanforderungen erfüllen. Ein Anpassen des zweiten Prozessors, beispielsweise ein Erweitern oder ein Austauschen des zweiten Prozessors zum Durchführen komplexerer oder geänderter Applikationen, ist somit völlig unabhängig vom ersten Prozessor möglich. Somit entfällt auf vorteilhafte Weise ein erneutes Überprüfen der Einhaltung vorgebbarer Sicherheitsanforderungen des ersten Prozessors, insbesondere eine erneute Zertifizierung. Der zweite Prozessor ist anpassbar zur Durchführung mindestens einer geänderten Anwendungsaufgabe oder einer weiteren Anwendungsaufgabe. Beispielsweise kann eine Erweiterbarkeit des zweiten Prozessors in einem Vorsehen eines zusätzlichen Kerns des Prozessors bestehen. Die Anpassbarkeit kann auch in einer Umprogrammierung eines Anwendungsprogramms auf dem zweiten Prozessor bestehen.

Unter einer Anwendungsaufgabe wird eine Aufgabe zur Verarbeitung von Daten durch den zweiten Prozessor verstanden, welche nicht die Regelungsaufgaben sind und die Verwendung des Manipulators für einen vorgegebenen Anwendungsfall ermöglichen.

Unter einer geänderten Anwendungsaufgabe wird eine solche durch den zweiten Prozessor auszuführende Aufgabe verstanden, welche im Hinblick auf die Möglichkeit der Verwendung des Manipulators in einer Anwendung von der Anwendungsaufgabe abweicht. Unter einer weiteren Anwendungsaufgabe wird eine zusätzliche Anwendungsaufgabe verstanden, welche Verwendungsmöglichkeiten oder Einsatzmöglichkeiten des Manipulators ermöglicht, welche durch die Anwendungsaufgabe nicht abgedeckt sind. Beispielsweise werden ein Bahnplanungsmechanismus angepasst, geänderte Optimierungsalgorithmen eingesetzt, oder es wird eine GUI erweitert oder abgeändert zur Vorgabe anderer oder zusätzlicher Nutzerdaten, oder es wird zusätzlich eine Anwendung vorgesehen, welche eine Verarbeitung eines Kamerabildes für eine Bahnplanung ermöglicht.

Auf vorteilhafte Weise erfolgt die Anpassung des zweiten Prozessors oder die Erweiterung des zweiten Prozessors ohne eine Anpassung des ersten Prozessors. Insbesondere ist auf vorteilhafte Weise eine Zertifizierung des zweiten Prozessors für einen Einsatz des Manipulators in einer Anwendung nicht nötig. Damit entfällt auch bei Erweiterung oder Anpassung des zweiten Prozessors eine Rezertifizierung.

Gemäß einer Ausgestaltung ist die geänderte oder weitere Anwendungsaufgabe auf dem zweiten Prozessor rückwirkungsfrei auf die Regelungsaufgaben des ersten Prozessors einrichtbar und durchführbar. Die jeweilige Verarbeitung von Daten auf dem ersten Prozessor und dem zweiten Prozessor ist somit strikt voneinander getrennt. Das Abändern des zweiten Prozessors lässt die Logik des ersten Prozessors unverändert.

Die Regelungsaufgaben des ersten Prozessors bleiben somit unverändert und auch eine Prüfung auf Einhaltung der vorgebbaren Sicherheitsanforderungen, insbesondere eine Zertifizierung, ist somit nicht nötig. Die Änderung oder Erweiterung der Anwendungsaufgabe des zweiten Prozessors, insbesondere das Vorsehen eines weiteren Kerns, ist somit ohne Rückwirkung auf den ersten Prozessor oder ohne Wechselwirkung mit dem ersten Prozessor durchführbar.

Gemäß einer weiteren Ausgestaltung ist auf dem ersten Prozessor ein Echtzeitbetriebssystem eingerichtet. Somit wird das aufwendige Vorsehen eines Echtzeitbetriebssystems vorteilhafterweise nur auf dem ersten Prozessor benötigt. Der zweite Prozessor muss Verarbeitungsaufgaben nicht in Echtzeit durchführen können.

Das Echtzeitbetriebssystem auf dem ersten Chip ist vorteilhafterweise auf den Funktionsumfang des Manipulators ausgerichtet. Es erfolgt eine Fokussierung auf Manipulationsberechnungen im ersten Prozessor mit fester Struktur oder fester Hardware-Leistung. Somit können Kosten reduziert werden, welche durch einen leistungsfähigeren Prozessor beispielsweise für Regelung und Bahnplanung und damit verbundene aufwendigere Zertifizierung eines Prozessors, auf welchem auch die Anwendungsaufgaben durchgeführt werden, entstehen würden.

Gemäß einer Ausgestaltung ist der erste Prozessor als ein Computerchip mit einem ersten, einem zweiten und einem dritten Kern ausgebildet, wobei der erste Kern die Regelungsaufgabe durchführt, wobei der zweite und der dritte Kern eine Sicherheitsaufgabe durchführen. Der erste Prozessor, welcher die Anforderungen im Hinblick auf Echtzeit und Safety erfüllen muss, kann somit ein Mehrkernprozessor sein. Insbesondere erfolgt eine Aufteilung auf den ersten Kern für die Regelung und auf zwei weitere Kerne für die Safety. Ein solcher Dreikern-Motion Chip kann dann vorteilhafterweise zertifiziert werden, beispielsweise beim TÜV.

Gemäß einer Ausgestaltung ist der zweite Prozessor als ein Mehrkernprozessor ausgebildet. Der zweite Prozessor als Applikationsprozessor kann je nach Anwendung angepasst werden. Es kann beispielsweise eine Erweiterung auf einen Mehrkernprozessor erfolgen, falls die Anwendungsaufgaben dies erfordern. Alternativ ist es ebenso denkbar, einen Einkern-Prozessor mit ausreichend großer Rechenleistung zu verbauen.

Gemäß einer Ausgestaltung ist das System als Steuerung für einen Manipulator ausgebildet.

Die Erfindung betrifft ferner einen Manipulator mit einem System gemäß einer der oben beschriebenen Ausgestaltungen.

Die Erfindung betrifft ferner ein Verfahren zur Änderung oder Erweiterung von Anwendungsaufgaben eines Manipulators,
- wobei auf einem zweiten Prozessor das Durchführen der Anwendungsaufgabe umfassend eine Bahnplanungsaufgabe sowie eine Aufgabe zur Verarbeitung von Nutzereingaben erfolgt,
- wobei mindestens eine geänderte oder weitere Anwendungsaufgabe auf dem zweiten Prozessor eingerichtet wird,
- wobei auf einem ersten Prozessor das Durchführen von Regelungsaufgaben zur Bewegungsführung erfolgt, wobei die Regelungsaufgaben in Echtzeit und unter Einhaltung vorgebbarer, insbesondere zertifizierbarer, Sicherheitsanforderungen durchgeführt werden,
- wobei das Einrichten der mindestens einen geänderten oder weiteren Anwendungsaufgabe rückwirkungsfrei auf den ersten Prozessor durchgeführt wird.

Gemäß einer Ausgestaltung wird die geänderte oder weitere Anwendungsaufgabe als ein Add-On oder als ein Plug-In zu bestehenden Anwendungsaufgaben eingerichtet. Somit sind die Add-Ons oder Plug-Ins nicht Bestandteil des ersten Prozessors und können beliebig verändert oder angepasst werden. Lediglich der zweite Prozessor wird angepasst und muss aufgrund der Separierung vom ersten Prozessor mit den Regelungsaufgaben des Manipulators nicht zertifiziert werden.

Die Erfindung wird nachfolgend anhand von Ausführungsbeispielen mit Hilfe der Figuren näher erläutert. Es zeigen:
- Figur 1: eine schematische Darstellung eines Prozessors zur Steuerung eines Roboters gemäß dem Stand der Technik;
- Figur 2: eine schematische Darstellung des Systems zur Bewegungsführung eines Manipulators gemäß einem ersten Ausführungsbeispiel der Erfindung;
- Figur 3: eine schematische Darstellung eines Manipulators mit Steuerungssystem zur Bewegungsführung gemäß einem zweiten Ausführungsbeispiel der Erfindung.

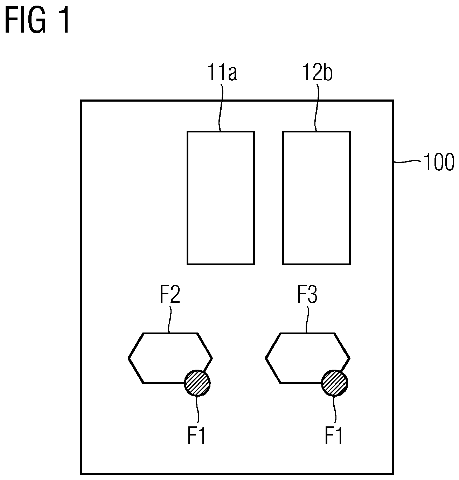

Anhand von Figur 1 soll veranschaulicht werden, wie Steuerungen für Manipulatoren oder Roboter im Stand der Technik ausgebildet sind. Dabei ist beispielsweise ein Dual-Betriebssystem 100 vorgesehen mit zwei Kernen 11a, 12b, eines Prozessors. Um die Funktion der Regelung F2 sowie die Funktion der Bahnplanung F3 für einen Robotergreifarm gesichert durchführen zu können, läuft eine Sicherheitssteuerung in zwei Instanzen des sicheren Betriebssystems auf jeweils einem Kern oder Core des Prozessors. Somit sind die Regelung F2 sowie die Bahnplanung F3 jeweils als sichere Funktionen F1 ausgeführt. Somit laufen alle drei für die Ausführung einer Roboterbewegung zuständigen Aufgaben, d.h. die Bahnplanung, die Regelung und die Sicherheit, auf derselben CPU. Somit kann jede der genannten Aufgabe von jeder anderen Aufgabe überwacht und beeinflusst werden.

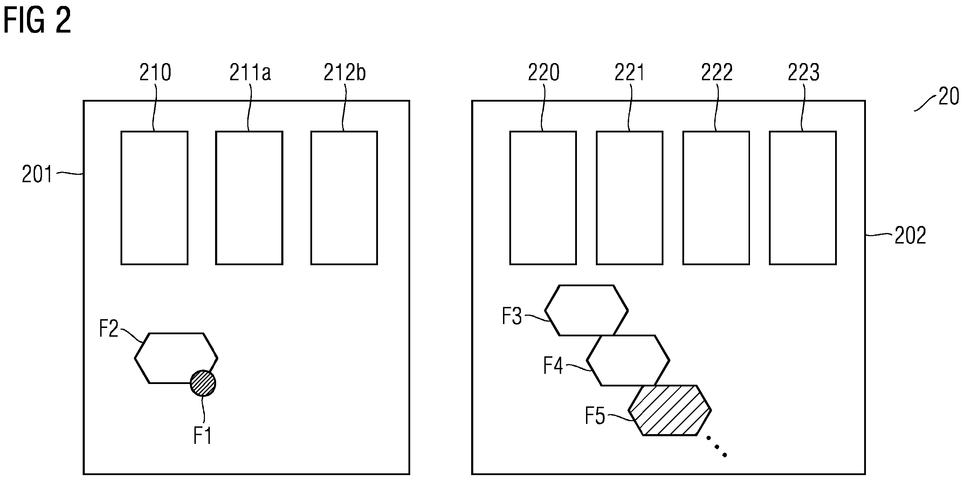

In Figur 2 ist demgegenüber ein System zur Bewegungsführung eines Manipulators gemäß einem ersten Ausführungsbeispiel der Erfindung gezeigt. Dabei weist das System 20 zur Bewegungsführung des Manipulators einen ersten Prozessor 201 sowie einen zweiten Prozessor 202 auf. Auf dem ersten Prozessor 201 erfolgt das Durchführen von Regelungsaufgaben zur Bewegungsführung 2.

Für gängige Robotikanwendungen müssen die Regelungsaufgaben in Echtzeit durchführbar sein und zudem vorgebbare und insbesondere zertifizierte Sicherheitsanforderungen erfüllen. Der erste Prozessor 201 ist derart ausgebildet, dass die vorgegebenen Sicherheitsanforderungen F1 eingehalten werden. Beispielsweise handelt es sich um einen Safety-zertifizierten Chip.

Der erste Prozessor 201 ist dabei beispielsweise derart ausgebildet, dass ein erster Kern 210, ein zweiter Kern 211a , sowie ein dritter Kern 212b vorgesehen sind. Beispielsweise ist der erste Kern 210 zum Durchführen der Regelungsaufgabe F2 vorgesehen. Der zweite Kern 211a und der dritte Kern 211b führen die Sicherheitsaufgabe F1 durch. Dafür handelt es sich bei dem zweiten Kern 211a und dem dritten Kern 212b beispielsweise um zwei dedizierte Safety-Kerne mit jeweils unterschiedlicher Implementierung der Software zur Durchführung eines Quervergleichs der parallelen Ausführungen der Software. Somit leistet der erste Prozessor 201 eine sicherheitsgerichtete Regelung des Manipulators.

Der zweite Prozessor 202 ist dafür vorgesehen, eine Bahnplanungsaufgabe F3 durchzuführen. Diese muss nicht zwangsläufig sicherheitsgerichtet ausgeführt werden. Daher wurde diese Bahnplanungsaufgabe F3 nicht auf dem ersten Prozessor 201 vorgesehen, welcher Safety-zertifiziert ist, sondern auf dem zweiten Prozessor 202, der nicht zertifiziert wird. Zudem wird auf dem zweiten Prozessor 202 eine Aufgabe zur Verarbeitung von Nutzereingaben F4 ausgeführt.

Über ein sogenanntes Graphical User Interface oder eine graphische Nutzerschnittstelle, kurz GUI, ist die Interaktion zwischen einem Operator oder einem Nutzer oder einem Anwender des Manipulators sowie der Steuerung möglich. Das GUI legt fest, welche Möglichkeiten der Nutzereingaben es gibt. Beispielsweise werden durch die GUI vom Operator Rahmenbedingungen wie beispielsweise die in einem Pick and Place-Verfahren zu greifenden Objekte oder Materialparameter von zu bearbeitenden Objekten oder ähnliches vorgegeben. Beispielsweise kann ferner hier auch eine Greifaufgabe oder insbesondere die Abfolge von Greif- und Hebelbewegungen vorgegeben werden.

Dafür sind auf dem zweiten Prozessor 202 beispielsweise vorteilhafterweise vier Kerne 220 bis 223 vorgesehen. Ein solcher Vierkernprozessor ist insbesondere vorteilhaft, um aufwendige, auf dem zweiten Prozessor 202 vorgesehene Aufgaben oder viele parallel abzuarbeitenden Aufgaben durchzuführen. Dabei werden rechenaufwendige Aufgaben auf mehrere Kerne aufgeteilt und durch eine solche Parallelisierung die Leistung gesteigert.

Auf dem zweiten Prozessor 202 vorgesehene abzuarbeitende Aufgaben müssen nicht bestimmte vorgegebene Sicherheitsanforderungen erfüllen. Daher muss der Prozessor auch nicht zertifiziert werden. Eine Veränderung der Hardware oder Software des zweiten Prozessors bleibt somit ohne Auswirkung auf die Safety-relevanten Aufgaben des ersten Prozessors 201 und somit auch ohne Auswirkung auf eine bereits erfolgreich durchlaufene Zertifizierung.

Besonders vorteilhafterweise kann mit dem vorgestellten System 20 eine Anwendungsaufgabe, welche auf dem zweiten Prozessor 202 vorzusehen ist, flexibel abgeändert oder hinzugefügt werden. Beispielsweise soll aufgrund einer geänderten Verwendung des Manipulators in einer Anwendung neu eine Kamera verbaut werden und das Kamerabild eines zu greifenden Objektes in der Steuerung berücksichtigt werden. Ein Ergebnis einer Auswertung des Kamerabildes soll beispielsweise die Bahnplanung des Manipulators beeinflussen.

Für die Eingabe von Daten für die weitere Verarbeitung und Auswertung des Kamerabildes wird auf dem zweiten Prozessor 202 eine weitere Anwendungsaufgabe F5 vorgesehen. Zur Veranschaulichung der Tatsache, dass diese weitere Anwendungsaufgabe F5 erst nachträglich ergänzt wurde, ist die Funktion in der Figur 2 mit einer schraffierten Funktionsbox gekennzeichnet worden.

In einer herkömmlichen Robotersteuerung einem einzigen Prozessor hätte dieser Prozessor durch das Ergänzen der weiteren Anwendungsaufgabe erneut zertifiziert werden müssen. Das Hinzufügen der weiteren Anwendungsaufgabe F5 gemäß dem ersten Ausführungsbeispiel der Erfindung lässt hingegen eine Zertifizierung des ersten Prozessors 201 unberührt, da die Anpassung der Anwendungsaufgaben auf dem zweiten Prozessor 202 ohne Rückwirkung auf den ersten Prozessor 202 erfolgt. Dies ist durch das Vorsehen der separaten Prozessoren oder CPUs auf dem System 20 zur Bewegungsführung möglich.

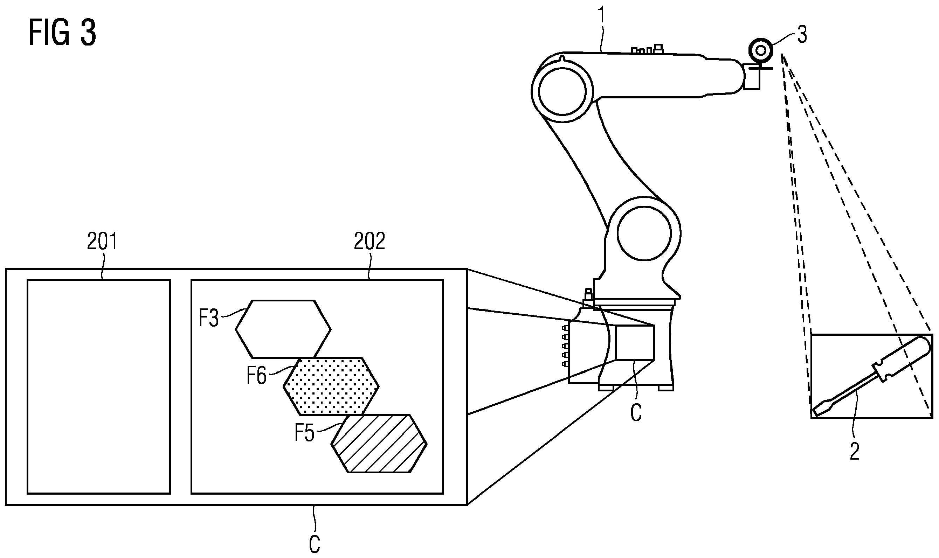

In Figur 3 wird das erste Ausführungsbeispiel aufgegriffen: Ein Manipulator 1 soll mittels einer Bewegungssteuerung C bewegt werden um eine Robotergreifaufgabe zu erfüllen. Dabei soll ein Werkzeug 2 von dem Manipulator gegriffen werden, um sodann eine Bearbeitungsaufgabe durchzuführen. Um flexible und veränderliche Ausgangspositionen des Werkstücks zu ermöglichen, soll ein Kamerabild für die Steuerung C des Manipulators bereitgestellt werden, anhand dessen eine Bahnplanung durch die Steuerung C an die Ausgangsposition des Werkzeugs angepasst werden kann. Beispielsweise wird je nach Ausgangslage des Werkstücks eine andere Bahn zum Aufgreifen des Werkstücks gewählt. Auf der Steuerung C ist ein erster Prozessor 201 vorgesehen, welcher Safety-zertifiziert ist. Dieser ist für die Regelungsaufgaben zur Bewegung des Manipulators zuständig.

Die Safety-Anforderungen können je nach Einsatzbereich unterschiedlich streng ausfallen. Eine Zertifizierung stellt sicher, dass eine verwendete Steuerung für den Manipulator in der vorgesehenen Anwendung zugelassen ist. Beispielsweise muss sichergestellt sein, dass Schutzzonen eingehalten werden, die durch eine Mensch-Roboter Interkation erforderlich sind. Beispielsweise müssen weiter vorgesehene Stop-Vorgänge zum Anhalten des Roboters und Not-Stop-Verfahren gesichert eingerichtet sein.

Die Steuerung C weist zudem einen zweiten Prozessor 202 auf, der für die Anwendungsaufgaben des Manipulators zuständig ist. Diese Anwendungsaufgaben sind nicht Safety-verifiziert. Beispielsweise weist der zweite Prozessor 202 eine weitere Anwendungsaufgabe F5 auf, wie sie schon im Zusammenhang mit dem ersten Ausführungsbeispiel beschrieben wurde. Diese weitere Anwendungsaufgabe F5 wurde mit dem Verbau der Kamera in der beschriebenen Applikation notwendig und stellt eine Verarbeitung des Kamerabildes und eine Analyse der so empfangenen Daten für die Bahnplanungsaufgabe F3 sicher.

Gemäß dem zweiten Ausführungsbeispiel der Erfindung soll nun zusätzlich eine geänderte Anwendungsaufgabe F6 auf dem zweiten Prozessor 202 eingerichtet werden, welche die Anwendungsaufgabe der Verarbeitung von Nutzereingaben F4 modifiziert. Eine graphische Nutzerschnittstelle soll dabei derart angepasst werden, dass ein Wizard-unterstütztes Programmieren von G-Code ermöglicht wird. Beispielsweise soll ein zusätzliches Anpassen der Greifaufgabe je nach erkanntem Typ des Werkzeugs erfolgen. Dafür wird ein Programm in G-Code verfasst, welches verschiedene Greifmechanismen für verschiedene Typen von Werkzeugen, insbesondere abhängig von der Position, vorsieht. Die Änderung an der Anwendungsaufgabe F4 hin zur geänderten Anwendungsaufgabe F6 wurde in der Figur 3 graphisch durch eine ausgefüllte Funktionsbox gekennzeichnet.

Beispielsweise sollen veränderte oder zusätzliche G-Codes flexibel über die graphische Nutzerschnittstelle vorgegeben werden können. Insbesondere soll nicht nach jeder Anpassung eine Rezertifizierung der gesamten Steuerung C notwendig werden.

Durch die Trennung und Aufteilung der Aufgaben, die Echtzeit und Safety-Anforderungen erfüllen müssen von den Anwendungsaufgaben, welche diese Anforderungen nicht erfüllen müssen, auf zwei unterschiedliche Prozessoren wird vorteilhafterweise eine Steigerung der Effizienz aufgrund der Beschränkung der Zertifizierung auf das Notwendigste erreicht. Somit ist eine kostengünstigere Produzierung von Robotersteuerung möglich.

Der Safety-Chip ist beispielsweise über den TÜV zertifizierbar und kann gemeinsam mit dem Anwendungsprozessor als Standardbaugruppe in ein Steuerungssystem integriert werden. Beispielsweise sind standardmäßig für den Anwendungsprozessor vier oder mehr Kerne vorgesehen. Je nach Komplexität der Anwendungsaufgaben, die beispielsweise für einen Acht-Achs-Roboter ermöglicht werden sollen, kann der Vier-Kern-Anwendungsprozessor noch um weitere Kerne erweitert werden. Sowohl das Erweitern der Anwendungsaufgaben als auch das Erweitern der Chip-Architektur auf mehrere Kerne belässt die Zertifizierung, welche durch Sicherheitsanforderungen und Überprüfung des ersten Prozessors in Tests erhalten wurde, unberührt.

## Patentansprüche

1. System zur Bewegungsführung eines Manipulators (1), aufweisend
- einen ersten Prozessor (201) zum Durchführen von Regelungsaufgaben zur Bewegungsführung (F2), wobei die Regelungsaufgaben in Echtzeit durchführbar sind und unter Einhaltung vorgebbarer, insbesondere zertifizierbarer, Sicherheitsanforderungen (F1) durchführbar sind;
- mindestens einen zweiten Prozessor (202) zum Durchführen einer Anwendungsaufgabe umfassend eine Bahnplanungsaufgabe (F3) sowie eine Aufgabe zur Verarbeitung von Nutzereingaben (F4), wobei der zweite Prozessor (202) anpassbar ist zur Durchführung mindestens einer geänderten oder weiteren Anwendungsaufgabe.

2. System nach Anspruch 1, wobei auf dem zweiten Prozessor (202) die geänderte oder weitere Anwendungsaufgabe rückwirkungsfrei auf die Regelungsaufgaben (F2) des ersten Prozessors (201) einrichtbar und durchführbar ist.

3. System nach Anspruch 1 oder 2, wobei auf dem ersten Prozessor (201) ein Echtzeit-Betriebssystem eingerichtet ist.

4. System nach einem der vorstehenden Ansprüche, wobei der erste Prozessor (201) als ein Computerchip mit einem ersten, einem zweiten und einem dritten Kern ausgebildet ist, wobei der erste Kern die Regelungsaufgabe (F2) durchführt, wobei der zweite und der dritte Kern eine Sicherheitsaufgabe (F1) durchführen.

5. System nach einem der vorstehenden Ansprüche, wobei der zweite Prozessor (202) als ein Mehrkernprozessor ausgebildet ist.

6. System nach einem der vorstehenden Ansprüche, wobei das System als Steuerung für einen Manipulator ausgebildet ist.

7. Manipulator mit einem System gemäß einem der vorstehenden Ansprüche.

8. Verfahren zur Änderung oder Erweiterung einer Anwendungsaufgabe eines Manipulators (1),
- wobei auf einem zweiten Prozessor (202) das Durchführen der Anwendungsaufgabe umfassend eine Bahnplanungsaufgabe (F3) sowie eine Aufgabe zur Verarbeitung von Nutzereingaben (F4) erfolgt,
- wobei mindestens eine geänderte oder weitere Anwendungsaufgabe auf dem zweiten Prozessor (202) eingerichtet wird;
- wobei auf einem ersten Prozessor (201) das Durchführen von Regelungsaufgaben (F2) zur Bewegungsführung erfolgt, wobei die Regelungsaufgaben (F2) in Echtzeit und unter Einhaltung vorgebbarer, insbesondere zertifizierbarer, Sicherheitsanforderungen (F1) durchgeführt werden,
- wobei das Einrichten der mindestens einen geänderten oder weiteren Anwendungsaufgabe rückwirkungsfrei auf den ersten Prozessor (201) durchgeführt wird.

9. Verfahren nach Anspruch 8, wobei die geänderte oder weitere Anwendungsaufgabe als ein Add-On oder als ein Plug-In zu bestehenden Anwendungsaufgaben eingerichtet wird.
